# EUROPEAN PATENT SPECIFICATION

(11) **EP 1 060 005 B1**
(45) Date of publication and mention of the grant of the patent: **25.05.2005**
(21) Application number: 99911031.5
(22) Date of filing: 01.03.1999
(51) Int. Cl.: B01D 61/16

(54) **METHOD FOR THE PURIFICATION AND RECOVERY OF WASTE GELATIN**
VERFAHREN ZUR REINIGUNG UND WIEDERVERWENDUNG VON ABFALLGELANTINE
PROCEDE DE RECUPERATION ET DE PURIFICATION DE GELATINE RESIDUAIRE

(30) Priority: 03.03.1998 US 33679; 16.11.1998 US 108584 P
(43) Date of publication of application: 20.12.2000
(73) Proprietor: A.B. Technologies, L.L.C., Dresher, PA 19025-1431 (US)
(72) Inventor: SCHMIDT, William, Dresher, PA 19025-1431 (US)
(74) Representative: Cockbain, Julian, Dr.
(86) International application number: PCT/US1999/004503
(87) International publication number: WO 1999/044727

(56) References cited:
- EP-A- 0 585 180
- DE-A- 4 041 433
- FR-A- 2 455 060
- GB-A- 232 077
- GB-A- 415 088
- US-A- 5 074 102
- US-A- 5 248 418
- US-A- 5 288 408
- PATENT ABSTRACTS OF JAPAN vol. 1995, no. 08, 29 September 1995 (1995-09-29) & JP 07 133465 A (FUJI CAPSULE KK), 23 May 1995 (1995-05-23) -& DATABASE WPI Section Ch, Week 199529 Derwent Publications Ltd., London, GB; Class B07, AN 1995-220911 XP002164225 & JP 07 133465 A (FUJI CAPSULE KK), 23 May 1995 (1995-05-23)

## Description

### Field of the Invention

The present invention is generally directed to a process for recycling gelatin waste and derivatives thereof and in particular, to a process for recycling gelatin waste and its derivatives resulting from industrial encapsulation processes.

### Background of the Invention

Gelatin and gelatin derivatives are used to encapsulate the products of several industries. Examples are described in U.S. Pat. No. 5,074,102, issued to Simpson et al, and include the encapsulation of medicinal compounds such as drugs and vitamins; employment of gelatin encapsulation in food packaging, such as for powdered instant coffee or spices; in candy manufacturing; in fertilization of ornamental plants and/or indoor plants; in packaging of sensitive seeds in combination with protective agents and/or fertilizers; and in the packing of single dyestuffs or mixtures of various drugs.

In each of the above-recited manufacturing and production processes, a certain amount of the encapsulating material is lost as waste. Frequently, this amount approaches 50% or more of the total starting material, depending on the arrangement of production employed. When considering that the cost of the encapsulating material in the United States averages approximately $3.10 per pound ($6.82 per kilo) as of September, 1997, it is clear that the economic consequences of such waste can be significant. As a result, manufacturers have attempted to offset poor production efficiency by recycling the waste material for reuse. Such attempts, however, have not been met with a great deal of success.

Prior art methods of gelatin recovery and purification suffer from a variety of shortcomings to be discussed in further detail below. Before these shortcomings can be fully appreciated, however, the composition of the encapsulation waste material itself should be further understood. In general, waste material of encapsulation processes are comprised of a variable number of components added to a gelatin base. Among them are solvents (usually water); plasticizers and lubricants (when desired); and, contaminants in the form of residual active ingredients, i.e. the substance being encapsulated. In addition, coloring agents and preservatives may also be present. Thus, it can be observed that successful recycling involves not only the recovery of gelatin from surrounding oils, but also the removal of the remaining components of the waste in order to achieve a relatively pure, reusable product.

Extraction has been the principle method for accomplishing removal of oily components, actives and the like in the pharmaceutical industry. While several solvents have been used in the prior art in an effort to accomplish separation, each suffer from a variety of shortcomings not the least of which is the necessity of ultimately removing yet another component, i.e. the solvent itself, from the recycled materials. To date, the most popular and widely used solvents used to separate gelatin from oily components and actives are chlorinated solvents such as, for example, 1,1,1,-trichloroethane with naphtha. The use of chlorinated solvents, however, is accompanied by high costs, disposal problems, and most importantly, environmental concerns. Attempts have been made to use other solvents including isopropyl alcohol, methyl isobutyl ketone, toluene, hexane, heptane, acetone, and acetone/water mixtures, but the resulting yields are insufficient and/or the separation is poor. Furthermore, some of these chemicals are relatively expensive and/or present similar environmental, disposal, and safety concerns as the chlorinated solvents. None of them have been found to separate oily components and actives with a high degree of efficiency.

U.S. Patent No. 5,288,408, issued to Schmidt et al, discloses a method of recycling gelatin-based encapsulation waste material, and more specifically, to a process for the recovery and purification of gelatin and softening agents therefrom. In the preferred embodiment, deionized water is added to the waste material thereby forming an aqueous solution of gelatin and glycerine dispersed within the remaining oily components and residual active-ingredient components of the waste material. Extraction methods are employed under specific conditions to effect separation of the lower aqueous phase from the upper non-aqueous phase. The lower aqueous phase is hot filtered to remove any remaining traces of oily components or other contaminants and the filtrate is then charged to a concentration vessel adapted for vacuum distillation. The water solvent is thus removed under specific thermal and atmospheric conditions until the desired concentration of gelatin and glycerine is achieved. A relatively pure, concentrated aqueous gelatin-glycerine solution is obtained which may be stored or further processed for immediate reuse. Although this process lends itself to the removal of dyes and active ingredients with additional chemical reactions and processing, such dyes, active ingredients, and glycerine are not removed *in situ*.

It would, therefore, be desirable to provide a method for recycling gelatin-based encapsulation waste material that removes dyes, active ingredients, and glycerine *in situ* without the need for any additional processing.

### Summary of the Invention

Generally, a process for the purification and recycle of waste gelatin, active ingredients, and glycerine resulting from the manufacture of soft gelatin capsules is provided in accordance with the invention. In its broadest aspects, the process of the present invention includes the steps of effecting dissolution of the gelatin, active ingredient, glycerine, and other water-soluble components of the waste in a solvent such that a gelatin-containing solution dispersed within the remaining components of the waste is formed, separating the lower aqueous phase from the upper non-aqueous phase, and diafiltering the lower aqueous phase to remove the active ingredients, glycerine, and other water-soluble components and to provide at least a substantially purified aqueous gelatin solution.

In the process of the invention, the gelatin containing solution dispersed within the remaining components of the solution is permitted to settle into a lower aqueous phase and an upper non-aqueous phase. The lower aqueous phase is then, optionally, hot filtered to remove traces of the remaining components of the upper non-aqueous phase and/or suspended particles, such as titanium dioxide used as a capsule colorant then the hot filtered lower aqueous phase is diafiltered.

If dyes and pigments in the waste gelatin have an affinity for the gelatin, it may be necessary to take appropriate steps to eliminate this affinity prior to the diafiltration step. This affinity may be eliminated by use of, for example, activated clay, carbon cartridge filtration; carbon slurry formation followed by filtration to remove the carbon; pH adjustment to eliminate adhesion of the dye to the gelatin, followed by direct diafiltration to remove the dyes, and then adjustment of the pH back to the normal processing pH; or, by a combination of these methods.

In some cases dissolved air may be present in the recovered gelatin. The dissolve air may be removed by adegassing operation.

The invention accordingly comprises the several steps and the relation of one or more of such steps with respect to each of the others thereof, which will be exemplified in the method hereinafter disclosed, and the scope of the invention will be indicated in the claims.

### Brief Description of the Drawings

The following drawings in which like reference characters indicate like parts are illustrative of embodiments of the invention and are not intended to limit the invention as encompassed by the claims forming part of the Application.
Figure 1 is a schematic view of an embodiment of the method of gelatin recovery and purification provided in accordance with the present invention;
Figure 2 is a schematic view of a further embodiment of the method of gelatin recovery and purification in accordance with the present invention; and
Figure 3 is a schematic view of a further embodiment of the invention similar to Figure 2 is which a separate, external degassing operation is provided to remove dissolved gases (e.g. air) from the recovered gelatin.

### Detailed Description of the Preferred Embodiments

Gelatin is a protein derivative of collagen obtained, in general, by the boiling of skin, white connective tissues, and bones of animals and fish, and by the partial hydrolysis of collagen, in particular. As a colloid it has unique physical properties. Of particular significance to the present invention is its tendency to stay in solution and its ability to form dispersions in oils. Gelatin remains a solid at standard atmospheric pressure and temperature in the absence of a sufficient quantity of solvent.

Softening agents are sometimes added to plasticize the gelatin when soft, globular, gelatin shells are desired. Agents such as glycerine, sorbitol, or other similar polyols are commonly employed to achieve these characteristics.

The soft gelatin capsule-forming material will thus be used to enclose active ingredients in the form of powders, liquids, or combinations thereof. Oily components, such as vitamin A, vitamin E, and beta-carotene, for example, are frequently encapsulated in the pharmaceutical, cosmetic and nutritional industries. Additionally, other oily components like mineral oil or medium chain triglycerides (MCT's) may be used to coat the outer surface of the soft gelatin capsules during processing. Thus, it can be seen that the waste product of the encapsulation process may have many components (e.g. oily components), which must be removed before the gelatin waste is available for reuse as a relatively pure product. In some instances, coloring agents and preservatives may also be incorporated into the encapsulation gel mass. Commonly used preservatives include methylparaben, propylparaben, and sorbic acid.

As stated above, present methods of encapsulation lose as much as 50% or more of the gelatin starting material (i.e. gelatin ribbon) during processing, the balance of which is either discarded as a waste by-product or recycled. The latter option requires the removal of all of the above-mentioned components. The present invention provides a novel and efficient method of accomplishing recycling without experiencing the shortcomings of the prior art.

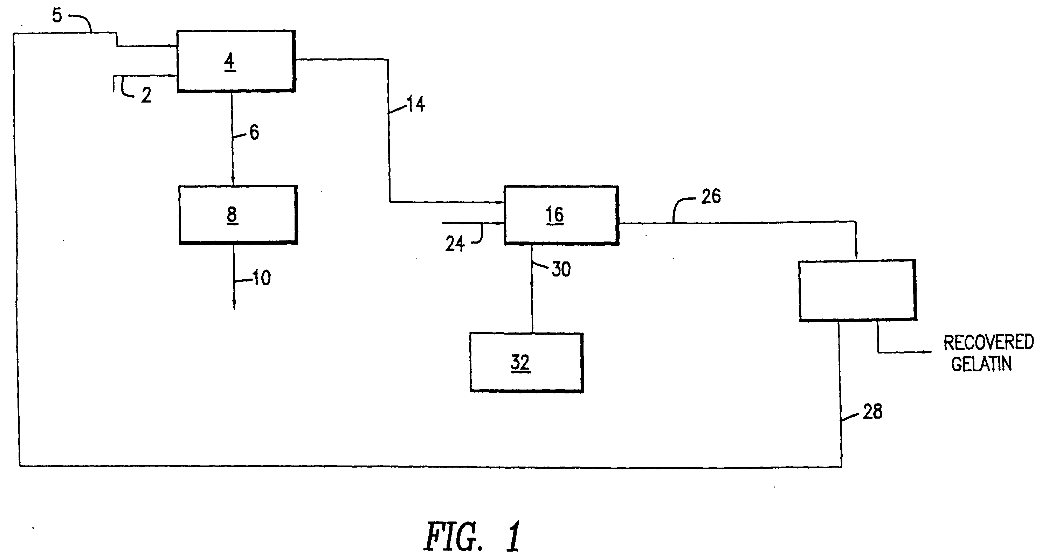

Reference is now made to Figure 1 wherein an embodiment of the present invention for the recovery and purification of gelatin is illustrated. A solvent for gelatin such as deionized water is added through a conduit 2 to a separation vessel 4 adapted with a heating jacket known in the art and is preheated to a temperature sufficient to maintain the gelatin in a flowable condition, as for example from about 30°C to 70°C. The waste material to be recycled is then charged to the separation vessel 4 through a conduit 5 which may be of stainless steel or glass-lined steel construction and sized according to batch size. The vessel 4 may also be provided with conventional agitation means (not shown). The waste material to be recovered is diluted with the solvent (e.g. deionized water) typically at about atmospheric pressure and to a preferred concentration of up to about 25% gelatin by weight. Dilution is preferably carried out at an elevated temperature (e.g. from about 30°C to 70°C). Agitation may be simultaneously performed to effect dissolution of the gelatin. A softening agent such as glycerine may be provided in a latter step of the process.

A solution of gelatin is thus formed and dispersed within the remaining oily components and residual active-ingredient components. The above recited concentration level of gelatin (up to about 25% by weight) is a preferred concentration for achieving rapid and thorough separation of an upper non-aqueous layer from a lower solvent based layer (e.g. aqueous layer). The upper non-aqueous layer is discarded or sent from the vessel 4 via a conduit 6 to a recycling system 8 which is known in the art. If recycled, the non-aqueous phase may be separated into oily components including, vitamins (for vitamin containing products) which emerge through a conduit 10. Included among such components may be mineral oil, garlic oil, fish oil and vitamin E.

The separation and recovery of the individual oily components within the recycling system 8 can be accomplished by a variety of processes including, but not limited to, fractional distillation, short path distillation, reverse osmosis, and/or supercritical fluid extraction. Short path distillation is a preferred process.

In general, distillation is a process in which a liquid is vaporized, recondensed and collected in a receiver. The liquid which has vaporized is collected in a receiver. The resultant liquid (i.e. the condensed vapor) is referred to as the condensate or distillate.

Distillation is a process for purifying liquids by separating the liquid into its components. It is based on the difference in volatility of the liquids. Volatility is a measure of the relative ease with which molecules of a liquid (or solid) escape from the surface to form a vapor. The vapor pressure of a liquid is related to the ease with which the liquid volatilizes (i.e. a relatively volatile substance exerts a relatively high vapor pressure at room temperature). The more volatile a substance, the higher its vapor pressure and the lower its boiling point.

Fractional distillation is the separation and purification, by distillation, of two or more liquids into various fractions. It is a systematic redistillation of distillates or fractions of increasing purity. A fractionating column is used to essentially perform a plurality, typically a large number of successive distillations without the necessity of actually collecting and redistilling the various fractions. A fractionating column is packed with glass beads, glass helices, metal screens or ceramic saddles to effect fractionation.

A series of distillations involving partial vaporization and condensation concentrates results in the more volatile component appearing in the first fraction of distillate and the less volatile component appearing in the last fraction or in the residual liquid. The vapor leaves the surface of the liquid and passes up the packing of the column. The vapor condenses on the cooler surfaces and redistills, typically many times before entering the condenser. By means of long and efficient distillation columns, two liquids may be at least substantially completely separated.

Short path distillation is an alternative distillation method useful for separating a substance that cannot be distilled by any of the ordinary distillation methods because (1) the substance is viscious, and any condensed vapors would plug the distilling column or condenser; and/or (2) the vapors of the substance are extremely susceptible to condensation.

Short path distillations differ from other distillations because (1) a condensed vapor flows to the distillate receiver or collector, (2) very low pressure (high vacuum) in the system favors vaporized molecules reaching the condensing surface without collision with other molecules which cause them to condense prematurely; (3) there is a very short distance between the surface of the evaporating liquid and the condenser surface; and (4) the substance has a residence time in the presence of heat which is very short so that thermal degradation is prevented.

A short path distillation apparatus includes a rotating still. Materials are fed into the rotating still and distributed evenly and thinly over a heated evaporating surface. The substance distills, over a very short time, and the vapors condense and run into a collector. The pressure can be as low as 1 um Hg.

Short path as defined herein is also known as molecular, wiped film, thin film, falling film, and rising film distillation.

Reverse osmosis is a process whereby dissolved solids or miscible liquid are removed from water by applying a pressure differential across a semipermeable membrane. The semipermeable membrane allows the water to flow through it, but prevents other components from passing through the membrane, leaving the other components behind.

With the vessel 4, once the gelatin is completely dissolved, agitation is terminated and the entire mass is allowed to stand. For a batch size of about 150 kilograms for example, it was observed that approximately 1 - 3 hours were required for separation. Separation of the lower aqueous phase from the upper non-aqueous phase within the vessel 4 can be facilitated by a sight glass incorporated into the recycling system 8. Accordingly, differences between the two phases is visually determined to effect accurate separation. The non-aqueous phase as previously indicated is discarded or further processed in the recycle system 8 while the lower aqueous phase is treated in the diafiltration system as discussed below.

Extraction of the lower aqueous layer can be carried out through a heated transfer conduit 14 to avoid solidification of the solution. A temperature range of, for example, from about 30° to 40°C is suitable from transporting the lower aqueous layer. As previously indicated, the upper non-aqueous phase may contain the oily components, oil soluble actives, coloring agents and preservatives which may themselves be subject to certain recycling techniques known in the art. Because the subject invention provides for efficient separation of gelatin from the non-aqueous phase, the remaining components of the upper non-aqueous phase will similarly have a greater degree of purity. Alternatively, a skimmer could be employed to remove the upper non-aqueous phase from the surface, leaving the lower aqueous phase for further processing. The present invention, therefore, provides a method for the more efficient recovery of active ingredients. This is particularly useful when the amount of waste active ingredient is relatively high and/or expensive. Recovery and purification of the active ingredients can result in significant cost savings.

In the embodiment shown in Figure 1, the aqueous based layer which may be heated as discussed above is sent via the conduit 14 to a diafiltration system 16 as hereinafter described to yield a concentrated recyclable gelatin product.

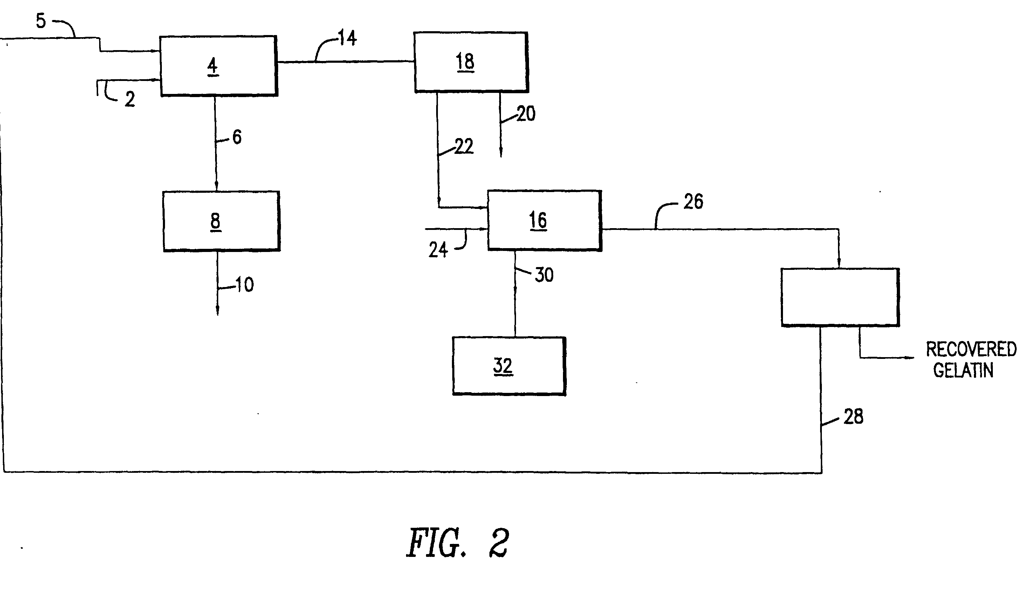

In the embodiment shown in Figure 2, the aqueous based layer containing the recyclable gelatin may be sent to a hot filtration assembly 18. The hot filtration assembly 18 is particularly desirable if the aqueous based layer contains particulate matter.

In particular, the lower aqueous phase may be heated, preferably hot filtered in the filtration assembly 18 if particulates are present at a temperature of approximately the same as above (i.e. from about 30°C to 70°C) to remove any remaining traces of oily components or other contaminants through a conduit 20. Filtration equipment may be employed such as a plate filter, or a coated plate filter like, for example, a sparkler filter. The preferred material of construction is stainless steel. Alternatively, nutche filters of the Rosenmund type or cartridge filters may be used for the purpose. Filtration may also be conducted by centrifugation. Here again, the residue may be recaptured for further separation and purification if desired, although the amounts involved at this point may not warrant the effort.

The filtrate from the optional hot filtration assembly 18 as shown in Figure 2 is then transported via a conduit 22 to the diafiltration assembly 16 to remove residual water soluble active ingredients, glycerine, water, and other water-soluble components such as preservatives and dyes and to provide gelatin in a form that is of sufficient purity and quality to permit reuse.

Diafiltration is a technique using ultrafiltration membranes to remove or fractionate different size molecules in macromolecular solutions. An ultrafiltration membrane retains macromolecules that are larger than the nominal molecular weight limit (NMWL) of the membrane and freely passes molecular species which are significantly smaller than the NMWL of the membrane. Macromolecules retained by the membrane are concentrated, while the low molecular weight species are removed. Typically, the macromolecules must be "washed" using multiple wash volumes to remove residual smaller molecules, hence the name diafiltration (i.e. filtration using ultrafiltration membranes and washing).

For continuous diafiltration, a supply of macromolecules (e.g. gelatin) is added via the conduit 22 to the diafiltration assembly 16 at the same rate as the filtrate is being removed. This is also referred to as constant volume diafiltration. The concentration of the macromolecules does not change during the diafiltration process.

Discontinuous diafiltration involves first concentrating the macromolecule (e.g. gelatin) batch to a predetermined volume, and then reconstituting the sample to its original volume with replacement solvent. This is repeated until the smaller molecules are removed.

Referring to Figures 1 and 2 diafiltration may be accomplished by first heating the system from about 50°C to 65°C by recirculating heated, deionized water typically for about 15 minutes through the conduit 24. The hot, aqueous feed stream is then pumped through the assembly 16 via a conduit 22 and concentrated to the desired gelatin/water concentration as discussed hereinafter. When the desired water/gelatin concentration is achieved, fresh, hot (e.g. from about 50 to 65°C), deionized water is fed into the system at exactly the same rate as the effluent exiting the system; the effluent being water and all water soluble components. Once the water soluble components have been removed, the remaining gelatin/water solution is recycled for gelatin encapsulation.

The filters that can be employed in the concentratton/diafitration step are known and available in the art. Such filters include screen filters including open channel filters and the like. The selection of a suitable filter for the purification of gelatin must be capable of separating gelatin (typically having a molecular weight of from about 30,000 to 50,000) from smaller molecules.

The recovered aqueous gelatin solution is concentrated to a final solids (gelatin) concentration of at least between about 20% by weight, preferably from about 30% and 50%. The remaining concentrated gelatin is then purified using between about 1 and 20 diafiltration volumes of water, preferably between about 3 and 10 diafiltration volumes to provide recovered gelatin that is sufficiently pure to permit reuse and which leaves the diafiltration assembly 16 via a conduit 26. A portion of the purified recycled gelatin may be sent back to the gelatin dissolving step via a conduit 28 to remove additional impurities from the gelatin to thereby obtain an even purer product.

Impurities such as dyes, actives, water, preservatives and glycerine can be removed from the diafiltration assembly via conduit 30.

Recovery of the above-mentioned impurities obtained from the diafiltration assembly 16 via the conduit can be performed in a recycling system 32. This system can be based on distillation systems including fractional distillation, short path distillation and reverse osmosis as previously described in connection with the recycle system 8. Fractional distillation and reverse osmosis are preferred for recovery of the stream 30 with reverse osmosis being the most preferred method.

The process stream 30 in addition to containing the above mentioned impurities may contain from about 1% to 10% by volume of glycerol in water, typically from about 3% to 7% by volume. The process stream 30 is treated at temperature of from about 0°C to 30°C, more typically from about 5°C to 20°C. Typically recovery of glycerol is at least 65% by volume, more typically from about 65% to 95%, most preferably from about 80% to 95% by volume.

In some instances, dyes and pigments that are used to color gelatin capsules have an affinity for the gelatin in the waste stream. Recovery of the gelatin alone may, therefore, require that steps be taken to eliminate this affinity so that the dyes can be removed. In general, it is necessary to take these steps following the hot filtration process and prior to the concentration/diafiltration process.

Suitable methods for eliminating the affinity between dyes and/or pigments and the gelatin include use of, for example, activated clay, carbon cartridge filtration; carbon slurry formation followed by filtration to remove the carbon; pH adjustment to eliminate adhesion of the dye to the gelatin, followed by direct diafiltration to remove the dyes, and then adjustment of the pH back to the normal processing pH (e.g. from about 5 to 7); or, a combination of these methods.

If an affinity exists between the dyes and/or pigments, once the affinity has been eliminated, diafiltration can be performed to obtain recovered gelatin. Alternatively, diafiltration itself will remove these dyes and/or pigments with sufficient diafiltration volumes, It is understood that the recycling system described can be incorporated into a conventional encapsulation apparatus to provide repeated or continual recycling of waste encapsulation materials.

Entrapped air may be a consideration during the process of manufacturing gelatin mass for encapsulation into soft gelatin capsules. General practice in the soft gelatin capsule manufacturing industry is to manufacture the gelatin mass under vacuum, for the express purpose of removing air, on a mezzanine or second floor then feed the molten gelatin mass, by gravity, to the encapsulation machines on the first floor.

In the absence of a building configuration conducive to gravity feed to the encapsulation machines, gelatin mass can be transferred by air pressure or pumps. The choice of pump must be such that as little air as possible is introduced into the gelatin mass. Examples of appropriate pumps may be, but are not limited to, peristaltic, moyno, and sine type pumps.

The ultrafiltration process of the present invention can generate flow rates in excess of 200 liters per minute. Although proper engineering and design of the diafiltration system will minimize or eliminate introduction of air from external sources, the flow rates generated may nonetheless, introduce some air into the gelatin. The air can be entrapped or dissolved in the viscous gelatin mass. Under these circumstances, it is desirable to degas or remove at least most of the air from the gelatin.

Typical practices in analytical chemistry for degassing dissolved air in water and/or organic solvents used as a mobile phase for High Performance Liquid Chromatography (HPLC) are: 1) pass the water and/or organic solvents through a 0.45 micron membrane filter and/or 2) sparge the water and/or organic solvent with an inert gas such as nitrogen and/or 3) allow the water and/or organic solvent to be exposed to molecular sieves until completely degassed.

It is also known in the art that microfilters are available commercially in the micron range similar to that used to degas mobile phase for HPLC analysis. Such filters may be obtained for example from A/G Technology of Needham, Massachusetts.

Any of the above-mentioned methods of degassing may be employed in the present invention. If, for example, a membrane filter (e.g. 0.45 micron) were employed to degas the gelatin, the filter could be incorporated into the diafiltration system 16 shown in Figure 2. For example, the aqueous layer passing through the conduit 14 to the diafiltration system 16 is first treated as described above to remove impurities via the conduit 30. The recovered gelatin may then be filtered with a membrane filter to remove air within the diafiltration system 16.

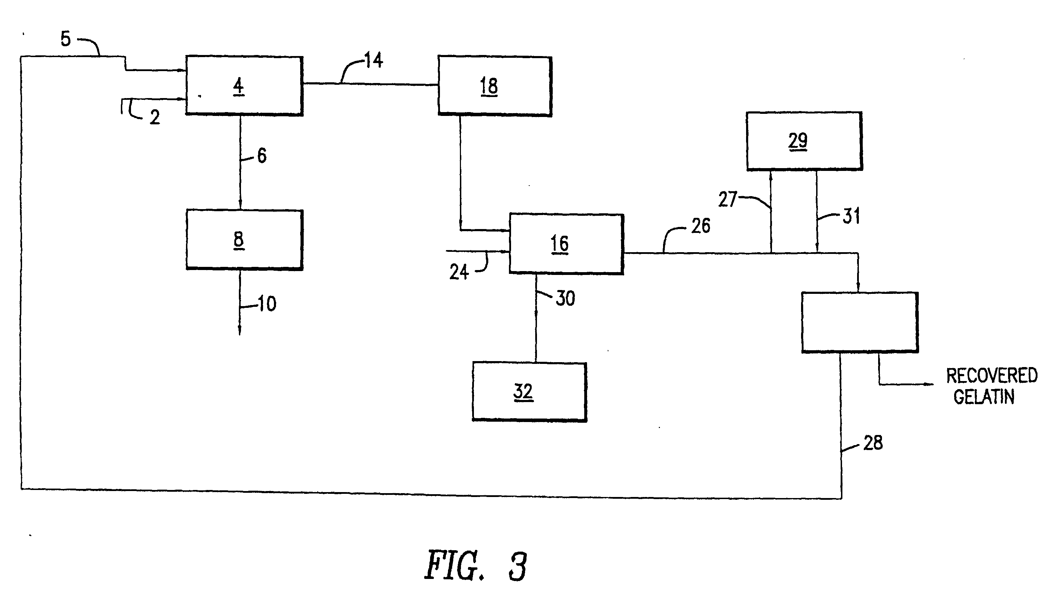

In another embodiment of the present invention, the degassing operation may be established externally of the diafiltration system. Referring to Figure 3, the recovered gelatin is sent via the conduit 26 to a conduit 27 which leads to a degassing system 29 (e.g. a membrane filter). Once the gas (e.g. air) is removed from the gelatin, the degassed gelatin is sent via the conduit 31 to be recycled or recovered.

## Claims

1. A process for the recovery and purification of waste gelatin material from an active agent encapsulation system which comprises the steps of:
(a) dissolving the waste gelatin material and other soluble components of the waste gelatin material in a solvent such that a dispersion comprising a waste gelatin material-containing solution dispersed within the remaining components of the encapsulation system is formed;
(b) permitting the dispersion to settle into an upper non-aqueous phase and a lower solvent based waste gelatin material-containing phase;
(c) separating the lower phase from the upper phase; and
(d) diafiltering the lower phase until a desired purity of recyclable waste material is achieved.

2. The process of claim 1 further comprising distilling the upper phase to separate oily components therefrom.

3. The process of claim 1 further comprising recovering the oily components from the upper phase.

4. The process of claim 3 wherein the oily components are selected from the group consisting of mineral oil, garlic oil, fish oil, vitamin E and combinations thereof.

5. The process of claim 2 wherein the step of distilling the upper phase is conducted by short path distillation.

6. The process of claim 1 further comprising hot filtering the lower phase to form a hot filtered lower phase comprising a filtrate and forwarding the filtrate to the diafiltration step.

7. The process of claim 1 wherein the solvent is water.

8. The process of claim 7 wherein the water is deionized water.

9. The process of claim 7 wherein the water is preheated to a temperature of from about 30°C to 70°C.

10. The process of claim 1 further comprising the step of agitating the waste material to further facilitate dissolution thereof.

11. The process of claim 1 comprising concentrating the recyclable gelatin to a final solids concentration of at least about 20%.

12. The process of claim 11 wherein the recyclable gelatin has a final solids concentration of from about 30 to 50%.

13. The process of claim 1 further comprising recycling a portion of the recovered waste gelatin material to step (a).

14. The process of claim 13 further comprising removing dyes and pigments from the filtrate prior to the diafiltration step.

15. The process of claim 6 comprising hot filtering the lower phase at a temperature of from about 30°C to 70°C.

16. The process of claim 6 further comprising treating the hot filtered lower phase to eliminate any affinity between dyes or pigments and the waste gelatin material contained within the hot filtered lower phase.

17. The process of claim 1 further comprising diafiltering the lower phase to produce a first concentrated stream of recoverable waste gelatin material and a second steam containing impurities and separating the impurities from the second stream.

18. The process of claim 17 further comprising recovering the separated impurities.

19. The process of claim 17 wherein the step of separating the impurities comprises distilling the second stream.

20. The process of claim 19 wherein distillation of the second stream is carried out by a process selected from fractional distillation, short path distillation, supercritical fluid extraction and reverse osmosis.

21. The process of claim 20 wherein distillation of the second stream is carried out by reverse osmosis.

22. The process of claim 1 further comprising removing at least a substantial portion of any gas contained within the lower phase.

23. The process of claim 22 comprising conducting the step of removing the gas during or shortly after the step of diafiltering the lower phase.

24. The process of claim 22 comprising conducting the step of removing the gas in a separate operation from the diafiltering step.

## Patentansprüche

1. Verfahren zur Wiedergewinnung und Reinigung von Gelatinematerialabfällen aus einem Wirkstoffverkapselungssystem, bei dem man:
(a) die Gelatinematerialabfälle und andere lösliche Bestandteile der Gelatinematerialabfälle in einem Lösungsmittel löst, so dass sich eine Dispersion bildet, die eine in den restlichen Bestandteilen des Verkapselungssystems dispergierte Gelatinematerialabfälle-haltige Lösung umfasst;
(b) die Dispersion in eine obere nichtwässrige Phase und eine untere Gelatinematerialabfälle-haltige Phase auf Lösungsmittelbasis absetzen lässt;
(c) die untere Phase von der oberen Phase abtrennt; und
(d) die untere Phase diafiltriert, bis eine gewünschte Reinheit des wiederverwertbaren Abfallmaterials erreicht ist.

2. Verfahren nach Anspruch 1, bei dem man außerdem die obere Phase destilliert, um ölige Bestandteile daraus abzutrennen.

3. Verfahren nach Anspruch 1, bei dem man außerdem die öligen Bestandteile aus der oberen Phase zurückgewinnt.

4. Verfahren nach Anspruch 3, bei dem die öligen Bestandteile unter Mineralöl, Knoblauchöl, Fischöl, Vitamin E und Kombinationen davon ausgewählt sind.

5. Verfahren nach Anspruch 2, bei dem man den Schritt der Destillation der oberen Phase durch Kurzwegdestillation durchführt.

6. Verfahren nach Anspruch 1, bei dem man außerdem die untere Phase heiß filtriert, wobei man eine ein Filtrat umfassende heißfiltrierte untere Phase erhält, und das Filtrat dem Diafiltrationsschritt zuführt.

7. Verfahren nach Anspruch 1, wobei es sich bei dem Lösungsmittel um Wasser handelt.

8. Verfahren nach Anspruch 7, wobei es sich bei dem Wasser um entionisiertes Wasser handelt.

9. Verfahren nach Anspruch 7, wobei man das Wasser auf eine Temperatur von etwa 30 °C bis 70 °C vorerwärmt.

10. Verfahren nach Anspruch 1, bei dem man außerdem die Materialabfälle mechanisch bewegt, um deren Auflösung weiter zu erleichtern.

11. Verfahren nach Anspruch 1, bei dem man die wiederverwertbare Gelatine auf eine Feststoffendkonzentration von wenigstens etwa 20 % einengt.

12. Verfahren nach Anspruch 11, wobei die wiederverwertbare Gelatine eine Feststoffendkonzentration von etwa 30 bis 50 % aufweist.

13. Verfahren nach Anspruch 1, bei dem man außerdem einen Teil der zurückgewonnenen Gelatinematerialabfälle in den Schritt (a) zurückführt.

14. Verfahren nach Anspruch 13, bei dem man außerdem vor dem Diafiltrationsschritt Farbstoffe und Pigmente aus dem Filtrat entfernt.

15. Verfahren nach Anspruch 6, bei dem man die untere Phase bei einer Temperatur von etwa 30 °C bis 70 °C heißfiltriert.

16. Verfahren nach Anspruch 6, bei dem man außerdem die heißfiltrierte untere Phase behandelt, um eine etwaige Affinität zwischen den in der heißfiltrierten unteren Phase enthaltenen Farbstoffen oder Pigmenten und den Gelatinematerialabfällen zu unterdrücken.

17. Verfahren nach Anspruch 1, bei dem man außerdem die untere Phase diafiltriert, wobei man einen ersten angereicherten Strom von rückgewinnbaren Gelatinematerialabfällen und einen zweiten Strom, der Verunreinigungen enthält, erhält und die Verunreinigungen vom zweiten Strom abtrennt.

18. Verfahren nach Anspruch 17, bei dem man außerdem die abgetrennten Verunreinigungen zurückgewinnt.

19. Verfahren nach Anspruch 17, bei dem der Schritt der Abtrennung der Verunreinigungen eine Destillation des zweiten Stroms umfasst.

20. Verfahren nach Anspruch 19, wobei die Destillation des zweiten Stroms durch ein Verfahren erfolgt, das unter fraktionierter Destillation, Kurzwegdestillation, überkritischer Fluidextraktion und reverser Osmose ausgewählt ist.

21. Verfahren nach Anspruch 20, wobei die Destillation des zweiten Stroms durch reverse Osmose erfolgt.

22. Verfahren nach Anspruch 1, bei dem man außerdem zumindest einen wesentlichen Teil der in der unteren Phase enthaltenen Gase entfernt.

23. Verfahren nach Anspruch 22, bei dem man den Schritt der Gasentfernung während oder kurz nach dem Schritt der Diafiltration der unteren Phase durchführt.

24. Verfahren nach Anspruch 22, bei dem man den Schritt der Gasentfernung in einem von dem Diafiltrationsschritt gesonderten Verfahrensschritt durchführt.

## Revendications

1. Procédé de récupération et de purification de déchets gélatineux à partir d'un système d'encapsulation d'agents actifs qui comprend les étapes consistant à :
(a) dissoudre le déchet gélatineux et les autres constituants solubles du déchet gélatineux dans un solvant de telle sorte qu'une dispersion comprenant une solution contenant le déchet gélatineux dispersée au sein des constituants restants du système d'encapsulation soit formée ;
(b) laisser la dispersion décanter en une phase supérieure non aqueuse et une phase inférieure à base de solvant contenant le déchet gélatineux ;
(c) séparer la phase inférieure de la phase supérieure ; et
(d) effectuer une diafiltration de la phase inférieure jusqu'à ce que la pureté souhaitée en déchets recyclables soit atteinte.

2. Procédé selon la revendication 1 comprenant en outre la distillation de la phase supérieure pour en séparer les constituants huileux.

3. Procédé selon la revendication 1 comprenant en outre la récupération des constituants huileux de la phase supérieure.

4. Procédé selon la revendication 3 dans lequel les constituants huileux sont choisis dans le groupe constitué par les huiles minérales, l'essence d'ail, l'huile de poisson, la vitamine E et les combinaisons de celles-ci.

5. Procédé selon la revendication 2 dans lequel l'étape de distillation de la phase supérieure est conduite par distillation directe.

6. Procédé selon la revendication 1 comprenant en outre la filtration à chaud de la phase inférieure pour former une phase inférieure filtrée à chaud comprenant un filtrat et l'envoi du filtrat à l'étape de diafiltration.

7. Procédé selon la revendication 1 dans lequel le solvant est l'eau.

8. Procédé selon la revendication 7 dans lequel l'eau est de l'eau déminéralisée.

9. Procédé selon la revendication 7 dans lequel l'eau est préchauffée à une température d'environ 30°C à 70°C.

10. Procédé selon la revendication 1 comprenant en outre une étape d'agitation du déchet pour davantage faciliter sa dissolution.

11. Procédé selon la revendication 1 comprenant la concentration de la gélatine recyclable à une concentration finale en matières solides d'au moins environ 20%.

12. Procédé selon la revendication 11 dans lequel la gélatine recyclable possède une concentration finale en matières solides d'environ 30 à 50%.

13. Procédé selon la revendication 1 comprenant en outre le recyclage d'une partie du déchet gélatineux récupéré à l'étape (a).

14. Procédé selon la revendication 13 comprenant en outre le retrait des colorants et les pigments du filtrat, avant l'étape de diafiltration.

15. Procédé selon la revendication 6 comprenant la filtration à chaud de la phase inférieure à une température d'environ 30°C à 70°C.

16. Procédé selon la revendication 6 comprenant en outre le traitement de la phase inférieure filtrée à chaud pour éliminer toute affinité entre les colorants ou les pigments et le déchet gélatineux contenu à l'intérieur de la phase inférieure filtrée à chaud.

17. Procédé selon la revendication 1 comprenant en outre la diafiltration de la phase inférieure pour produire un premier courant concentré de déchets gélatineux récupérables et un second courant contenant des impuretés, et la séparation des impuretés du second courant.

18. Procédé selon la revendication 17 comprenant en outre la récupération des impuretés séparées.

19. Procédé selon la revendication 17 dans lequel l'étape de séparation des impuretés comprend la distillation du second courant.

20. Procédé selon la revendication 19 dans lequel la distillation du second courant est réalisée par un procédé choisi parmi la distillation fractionnée, la distillation directe, l'extraction par fluide supercritique et l'osmose inverse.

21. Procédé selon la revendication 20 dans lequel la distillation du second courant est réalisée par osmose inverse.

22. Procédé selon la revendication 1 comprenant en outre le retrait d'au moins une partie substantielle de tout gaz contenu à l'intérieur de la phase inférieure.

23. Procédé selon la revendication 22 comprenant la réalisation de l'étape de retrait du gaz pendant ou peu de temps après l'étape de diafiltration de la phase inférieure.

24. Procédé selon la revendication 22 comprenant la réalisation de l'étape de retrait du gaz dans une opération distincte de l'étape de diafiltration.
